# FASCICULE DE BREVET EUROPEEN

(11) **EP 1 746 339 B1**
(45) Date de publication et mention de la délivrance du brevet: **12.08.2009**
(21) Numéro de dépôt: 06291149.0
(22) Date de dépôt: 13.07.2006
(51) Int. Cl.: F21S 8/10, F21V 7/00

(54) **Dispositif d'éclairage ou de signalisation, notamment pour véhicule automobile**
Vorrichtung zur Beleuchtung oder Signalgebung, insbesondere für Fahrzeuge
Device for lighting or signalising, in particular for vehicles

(30) Priorité: 21.07.2005 FR 0507786
(43) Date de publication de la demande: 24.01.2007
(73) Titulaire: VALEO VISION, 93012 Bobigny Cedex (FR)
(72) Inventeur: Gasquet, Jean-Claude, 89100 Saint Clement (FR)

(56) Documents cités:
- EP-A- 1 150 060
- DE-A1- 1 472 500
- DE-A1- 10 308 704
- DE-A1- 10 309 451
- DE-B- 1 167 773
- FR-A- 2 831 647
- US-A- 1 469 690
- US-A- 1 814 669
- US-A1- 2004 012 976

## Description

### Domaine de l'invention

La présente invention concerne les dispositifs d'éclairage ou de signalisation, destinés plus particulièrement aux véhicules automobiles. Les dispositifs d'éclairage comprennent principalement les projecteurs de faisceaux de croisement, de route, d'antibrouillard ou de circulation diurne, et les feux de signalisation comprennent principalement les feux de position, les feux indicateurs de changement de direction, les feux indicateurs de freinage, les feux de recul, les feux arrière de brouillard.

Pour simplifier l'implantation de ces différents dispositifs sur un véhicule, il est usuel d'en regrouper plusieurs dans un même boîtier, ce qui facilite en particulier leur installation sur le véhicule, et leur raccordement au faisceau électrique du véhicule à l'aide d'un seul connecteur pourvu du nombre approprié de broches.

Chaque fonction comporte généralement une source lumineuse, un réflecteur renvoyant les rayons lumineux émis par la source dans une direction générale d'émission, et éventuellement une glace de fermeture, encore appelée voyant, participant ou non à la formation du faisceau lumineux, ces différents éléments étant agencés pour fournir un faisceau d'éclairage ou de signalisation dont les caractéristiques géométriques et photométriques doivent être conformes à différentes réglementations. La glace de fermeture du boîtier ou voyant est généralement commune à tous les dispositifs présents dans le même boîtier.

On connaît ainsi par exemple du document DE 1 472 500 un projecteur pour véhicule automobile, comportant une source lumineuse, un réflecteur du genre parabolique, et un dispositif optique de formation d'un faisceau lumineux.

Chaque fonction nécessite ainsi un volume minimal pour son implantation dans un dispositif d'éclairage ou de signalisation particulier. Cependant, le volume disponible pour implanter des dispositifs d'éclairage ou de signalisation est de plus en plus réduit aussi bien à l'avant qu'à l'arrière d'un véhicule automobile moderne. En effet, les contraintes de l'aérodynamique et les conceptions des stylistes conduisent à des formes souvent très différentes de celles qui résultent uniquement de considérations techniques.

Il en résulte que dans de nombreux cas, trois contraintes sont imposées simultanément aux concepteurs de dispositifs d'éclairage ou de signalisation :
i) les faisceaux lumineux doivent être émis parallèlement à l'axe longitudinal du véhicule,
ii) la glace de fermeture du boîtier doit posséder une forme qui peut être à la fois très incurvée et très inclinée par rapport à la verticale, et
iii) le volume disponible à l'intérieur du boîtier pour y implanter les différents systèmes optiques est relativement réduit.

Il est possible de réaliser des dispositifs d'éclairage ou de signalisation dans lesquels les sources lumineuses, telles que des diodes électroluminescentes, sont positionnées sur une surface plane, avec ou sans réflecteur, avec ou sans écrans diffusants, quelle que soit la forme extérieure du dispositif d'éclairage ou de signalisation ou de sa glace de fermeture. Une telle conception, si elle présente un coût limité, ne permet pas de réaliser des dispositifs d'éclairage ou de signalisation dont le style soit adapté aux véhicules modernes.

D'autre part; si l'on désire réaliser par exemple un feu de signalisation galbé dans au moins une direction, on prévoit en général de disposer les sources lumineuses telles que des diodes électroluminescentes suivant une implantation régulière, c'est à dire en matrice de lignes et de colonnes en vue de face. Une telle conception est relativement contraignante. De plus, si le dispositif d'éclairage ou de signalisation présente un galbe dans deux directions, il faut la plupart du temps plier le flanc supportant les sources lumineuses suivant deux directions, ce qui est relativement compliqué.

### État de la technique

Pour résoudre ces problèmes, on a déjà proposé diverses solutions. Par exemple, dans le document FR-A-2 680 859, on connaît un élément optique de collimation pour un feu de signalisation, propre à être associé à un élément de support portant des diodes électroluminescentes comportant une face dorsale pour coopération avec ces diodes électroluminescentes, la face dorsale étant conformée en gradins dans lesquels débouchent des ouvertures traversantes associées aux diodes électroluminescentes.

Une telle conception permet d'obtenir un élément optique robuste, les diodes étant placées aux endroits adéquats. Elles sont portées par des lanières appartenant à l'élément de support, que comporte usuellement un tel feu de signalisation. Les diodes peuvent ainsi être prises en sandwich entre les lanières et les gradins de sorte qu'il est possible de placer les diodes à l'endroit approprié, notamment au foyer ou centre optique des ouvertures de l'élément de collimation, malgré la forme gauche du feu de signalisation.

On a également déjà proposé, dans le document EP-A-1 110 817, de réaliser un circuit d'alimentation de diodes électroluminescentes pouvant avoir une forme galbée, éventuellement dans deux plans différents, autre qu'une disposition en matrice, à partir d'un flan plat. Un tel procédé de réalisation d'un circuit d'alimentation de diodes électroluminescentes disposées sur des supports plans et parallèles entre eux comprend les étapes consistant à :
- déterminer les positions relatives des supports,
- déterminer s'il existe un ensemble de plans perpendiculaires aux supports, parallèles entre eux, passant chacun par au moins un support et tels que dans chaque plan, les supports ont des coordonnées respectives suivant un premier axe perpendiculaire au support qui varient de façon monotone avec leurs abscisses suivant un deuxième axe parallèle aux supports et aux plans,
- déterminer un plan de référence parallèle aux supports,
- déterminer l'image de chaque support par une projection suivant un même axe de projection sur le plan de référence suivie par une translation suivant le deuxième axe d'une longueur égale à la cote du support suivant l'axe de projection, et
- relier les images par des branches de connexion inscrites dans le plan de référence.

Ce document divulgue également un flan pour un circuit d'alimentation de composants électroniques tels que des diodes électroluminescentes, réalisé par exemple en mettant en oeuvre le procédé qui vient d'être mentionné, et comprenant des supports de composants, le flan étant de forme plane, les supports étant disposés de sorte qu'il est possible de réaliser dans le flan des découpes telles qu'en formant des plis parallèles les uns aux autres, on peut donner au flan une forme telle que les supports sont plans et parallèles entre eux, et au moins certains supports interceptés par un même plan parallèle aux plis et perpendiculaire aux supports ne sont pas coplanaires.

Un tel procédé est relativement complexe à mettre en oeuvre, et nécessite une étude complète de l'implantation du feu pour déterminer les lignes de pliure du flan pour son circuit d'alimentation électrique. Il en résulte que les dispositifs d'éclairage ou de signalisation ainsi obtenus offrent de plus grandes possibilités de développement aux stylistes, mais présentent des coûts relativement élevés limitant leur utilisation à des véhicules dits de haut de gamme.

On connaît enfin, du document US 2004/00112976, un dispositif d'éclairage ou de signalisation pour véhicule automobile comportant des modules, associés chacun à une LED, comportant une lentille d'entrée transformant le faisceau de rayons émis par la LED en un faisceau parallèle, une portion dans laquelle se propage ce faisceau parallèle, et une optique de sortie, comportant une portion centrale transmettant les rayons qu'elle reçoit en un faisceau convergent, et une portion annulaire, formée de deux surfaces réfléchissantes coniques se faisant face, de manière à ce que la surface de sortie des rayons lumineux soir supérieure à la section de la portion centrale.

Une telle conception est relativement massive et d'un encombrement important, et n'autorise que peu de libertés de style aux concepteurs.

### Exposé de l'invention

La présente invention se place dans ce contexte et elle a pour objet de proposer un dispositif d'éclairage ou de signalisation qui puisse facilement avoir un aspect en trois dimensions s'adaptant à la géométrie extérieure du dispositif d'éclairage ou de signalisation, de manière simple, peu onéreuse et fiable, en conservant les avantages d'un plan commun à deux dimensions pour la fixation des sources lumineuses.

La présente invention a donc pour objet un dispositif d'éclairage ou de signalisation, notamment pour véhicule automobile, comportant au moins une source lumineuse, neuse, au moins un système optique de sortie pour la formation d'un faisceau lumineux d'éclairage ou de signalisation réglementaire, et au moins un système optique d'entrée comprenant un élément de collimation recevant des rayons lumineux émis par la source et transmettant un faisceau de rayons parallèles vers un système optique de sortie de formation d'un faisceau lumineux d'éclairage ou de signalisation.

Selon la présente invention, l'élément de collimation est une lentille convergente, et au moins une surface de réflexion plane est disposée sur le trajet du faisceau de rayons parallèles.

Selon d'autres caractéristiques de la présente invention :
- le système optique d'entrée et le système optique de sortie sont d'une seule pièce ;
- le système optique d'entrée et le système optique de sortie forment un module monobloc ;
- le système optique d'entrée et le système optique de sortie sont reliés par des bras ;
- la surface de réflexion est un miroir plan ;
- la surface de réflexion est une surface plane sur laquelle le faisceau de rayons parallèles subit une réflexion totale ;
- l'élément de collimation est une lentille convergente dont le foyer est situé au voisinage de la source lumineuse;
- l'élément de collimation est une lentille de Fresnel ;
- le système optique de sortie comporte au moins un motif lenticulaire ;
- le motif lenticulaire possède une surface complexe ;
- le système optique de sortie comporte une surface sur laquelle les rayons lumineux parallèles du faisceau subissent une réflexion totale pour émerger radialement par rapport à l'axe optique et être réfléchis par un réflecteur dans une direction sensiblement parallèle à l'axe optique ;
- le réflecteur est constitué d'une surface complexe assurant la répartition horizontale et verticale des rayons qu'il réfléchit ;
- la source lumineuse est une diode électroluminescente ;
- le dispositif comporte au moins deux sources lumineuses, chacune étant associée à un système optique d'entrée et à un système optique de sortie ;
- les sources lumineuses sont disposées sur le même circuit d'alimentation électrique plan ;
- les systèmes optiques de sortie sont disposés dans des plans différents ;
- le dispositif comporte un système optique d'entrée et au moins deux systèmes optiques de sortie de formation d'un faisceau lumineux d'éclairage ou de signalisation, une surface de réflexion étant associée à chaque système optique de sortie ;
- le dispositif comporte un système optique de sortie et au moins deux systèmes optiques d'entrée, une surface de réflexion étant associée à chaque système optique d'entrée.

### Brève description des dessins

D'autres buts, caractéristiques et avantages de la présente invention ressortiront clairement de la description qui va maintenant être faite d'un exemple de réalisation donné à titre non limitatif en référence aux dessins annexés sur lesquels :
- la Figure 1 représente un schéma de principe d'un dispositif d'éclairage ou de signalisation réalisé selon la présente invention ;
- la Figure 2 représente un schéma de principe d'un dispositif d'éclairage ou de signalisation réalisé selon une variante de réalisation de la présente invention ;
- la Figure 3 représente une vue en perspective isométrique du dispositif d'éclairage ou de signalisation de la Figure 1 ;
- la Figure 4 représente une vue en perspective isométrique d'un exemple d'ensembles de dispositifs d'éclairage ou de signalisation selon la Figure 1 ;
- la Figure 5 représente une vue en perspective isométrique du dispositif d'éclairage ou de signalisation de la Figure 2 ;
- la Figure 6 représente une vue en perspective isométrique d'un exemple d'ensembles de dispositifs d'éclairage ou de signalisation selon la Figure 2 ;
- les Figures 7A, 7B et 7C représentent des exemples de dispositifs optiques de sortie utilisables en association avec les dispositifs des Figures 1 ou 2 ;
- la Figure 8 est une vue en coupe d'un deuxième mode de réalisation de l'élément optique de formation du faisceau d'éclairage ou de signalisation, utilisable en sortie des dispositifs représentés sur les Figures 1 à 6 ;
- la Figure 9 est une vue en perspective isométrique de trois quarts avant du deuxième mode de réalisation de la Figure 8 ;
- la Figure 10 est une vue analogue à celle de la Figure 9, de trois quarts arrière ;
- la Figure 11 représente un schéma de principe d'un dispositif d'éclairage ou de signalisation réalisé selon une deuxième variante de réalisation de la présente invention ;
- la Figure 12 représente un schéma de principe d'un dispositif d'éclairage ou de signalisation réalisé selon une troisième variante de réalisation de la présente invention ;
- la Figure 13 est une vue en perspective isométrique de trois quarts avant d'un dispositif d'éclairage ou de signalisation mettant en oeuvre la troisième variante de la Figure 12, et
- la Figure 14 représente un schéma de principe d'un dispositif d'éclairage ou de signalisation réalisé selon une quatrième variante de réalisation de la présente invention ;

### Description détaillée de modes de réalisation de l'invention

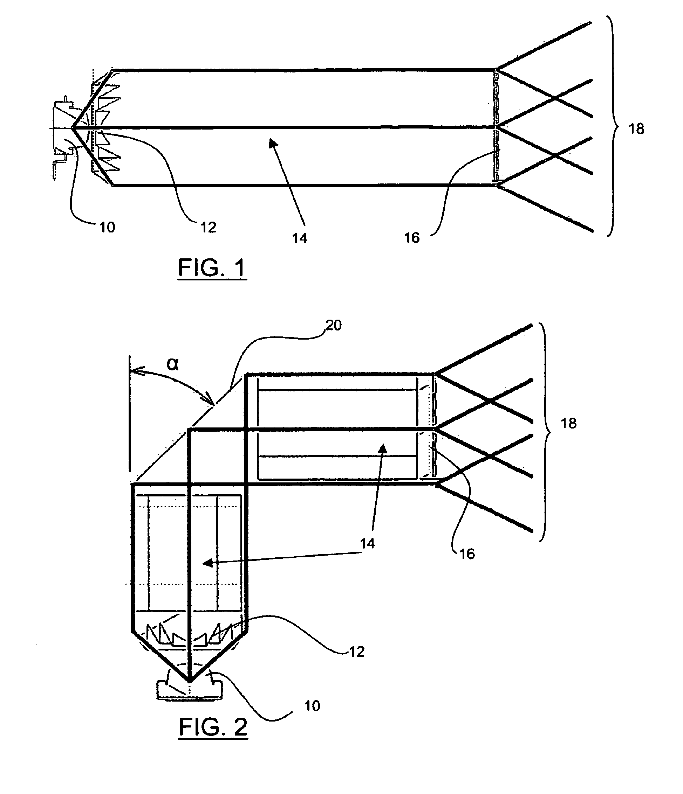

Par convention, dans la présente description, on appelle « avant » la direction dans laquelle est émise la lumière émergeant du dispositif d'éclairage ou de signalisation, et « arrière » la direction opposée. Sur la Figure 1, l'avant est ainsi à droite et l'arrière à gauche.

On a représenté sur la Figure 1 un schéma de principe d'un dispositif d'éclairage ou de signalisation réalisé conformément à la présente invention. Un tel dispositif comporte une source lumineuse 10, telle qu'une diode électroluminescente dans l'exemple représenté. Les rayons lumineux émis par cette source 10 sont reçus par un élément optique de collimation 12, dont le foyer est disposé au voisinage immédiat de la source lumineuse 10. Les rayons lumineux émergeant de cet élément de collimation forment donc un faisceau de rayons parallèles 14. Le faisceau de rayons lumineux parallèles 14 est ensuite reçu par un élément optique 16 de formation du faisceau d'éclairage ou de signalisation 18, constituant le système optique de sortie 16.

L'élément de collimation constituant le système optique d'entrée peut par exemple être réalisé par une lentille convergente, par exemple une lentille de Fresnel, et le système optique de sortie peut être formé par un élément comportant un ou plusieurs motifs lenticulaires, spécifiques pour satisfaire la fonction d'éclairage ou de signalisation recherchée. La source lumineuse 10 et le centre du système optique de sortie définissent l'axe optique du dispositif.

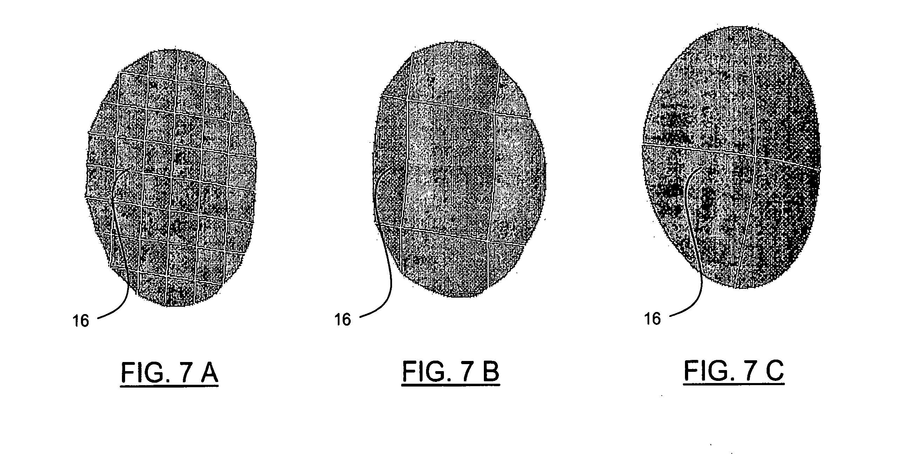

On a représenté sur les Figures 7A, 7B et 7C divers modes de réalisation du système optique de sortie 16. Sur la Figure 7A, il est formé d'un quadrillage de motifs lenticulaires, sur la Figure 7B, il est formé d'un motif central de forme générale carrée entouré de huit motifs latéraux, et sur la Figure 7C, il est formé d'un seul motif lenticulaire. De tels motifs ont des surfaces dites « complexes », répartissant les rayons lumineux horizontalement et verticalement pour répondre à une grille photométrique réglementaire.

La présente invention repose ainsi sur la formation, entre un système optique d'entrée associé à une source lumineuse, et un système optique de sortie assurant la formation d'un faisceau lumineux d'éclairage ou de signalisation réglementaire, d'un faisceau lumineux de rayons parallèles. Grâce à une telle conception, la distance entre la source lumineuse d'entrée et la face de sortie du système optique de sortie peut être choisie à volonté, en donnant au trajet du faisceau de rayons parallèles la longueur voulue, de sorte que cette distance n'est plus soumise à des contraintes de conception purement optique et des constructions géométriques qui en découlent.

Il en résulte également qu'il n'est plus nécessaire de concevoir des supports de sources lumineuses de formes complexes, par exemple courbées selon deux directions orthogonales, comme dans les documents précités. En effet, les sources peuvent être toutes fixées sur un support commun plat, les systèmes optiques d'entrée associés à chacune de ces sources étant situés à proximité de ces sources, ces systèmes optiques d'entrée transmettant des faisceaux lumineux parallèles en direction des systèmes optiques de sortie, qui eux peuvent être disposés dans une surface courbée selon deux directions orthogonales.

On a représenté sur la Figure 2 un schéma de principe analogue à celui de la Figure 1 d'un dispositif d'éclairage ou de signalisation réalisé selon une variante. On retrouve sur cette Figure 2 les mêmes éléments que ceux de la Figure 1, avec l'adjonction d'une surface de réflexion, par exemple un miroir plan 20 sur le trajet des rayons lumineux parallèles 14. Comme on l'a représenté sur la Figure 2, ce miroir plan est incliné d'un angle α par rapport à la direction générale des rayons lumineux parallèles transmis par le système optique d'entrée 12. Il en résulte que la direction des rayons lumineux 14 réfléchis par le miroir plan 20 fait un angle de 2α avec la direction des rayons incidents sur ce miroir 20. Dans l'exemple représenté sur la Figure 2, l'angle α vaut approximativement 45°, de sorte que le faisceau de rayons parallèles 14 est dévié selon environ un angle droit.

Une telle variante permet encore plus de souplesse dans la conception d'un dispositif d'éclairage ou de signalisation selon la présente invention, puisque la source lumineuse 10 ne doit pas être nécessairement située dans l'axe du dispositif optique de sortie 16.

Différents modes de réalisation peuvent être envisagés pour les dispositifs des Figures 1 ou 2. Selon un premier mode de réalisation, le système optique d'entrée 12 est d'une seule pièce avec le système optique de sortie 16. Le volume entre les systèmes optiques d'entrée 12 et de sortie 16 est ainsi formé du même matériau transparent que celui des systèmes optiques d'entrée et de sortie. Le dispositif d'éclairage ou de signalisation est ainsi formé d'une seule pièce optique volumique, formant un module monobloc, dont la section transversale sera avantageusement circulaire, mais pourra être également de forme polygonale, de préférence symétrique par rapport à l'axe optique du dispositif.

Le matériau transparent utilisé pourra par exemple être constitué de polycarbonate (PC) ou de polyméthyl méthacrylate (PMMA), ou encore par du verre.

Dans ce mode de réalisation, les systèmes optiques d'entrée et de sortie sont formés sur les surfaces d'extrémité du volume. L'élément de collimation constituant le système optique d'entrée pourra par exemple être formé par une forme concave donnée à la face en regard de la source lumineuse. Il pourra également être formé par des rainures circulaires concentriques constituant une lentille de Fresnel, compte tenu de l'indice de réfraction du matériau constituant le dispositif.

Un tel mode de réalisation présente l'avantage d'éviter les pertes lumineuses par des réflexions parasites sur les faces d'entrée et de sortie des systèmes optiques d'entrée et de sortie.

Dans le cas de la variante de la Figure 2, le miroir plan 20 est obtenu par une face plane sur laquelle les rayons lumineux 14 subissent une réflexion totale à l'intérieur du matériau. Il est donc nécessaire que l'angle α que forme cette face plane soit avec l'axe optique du système optique d'entrée soit supérieur à l'angle limite de réflexion totale, ou encore angle de Brewster, qui est fonction de l'indice de réfraction du matériau utilisé pour constituer le dispositif et de l'indice du milieu dans lequel baigne ce matériau, en général l'air atmosphérique, dont l'indice de réfraction est égal à l'unité par convention. Dans le cas des matériaux cités plus haut, cet angle limite est égal à environ 40 degrés pour le polycarbonate (PC) ou environ 43 degrés pour le polyméthyl méthacrylate (PMMA).

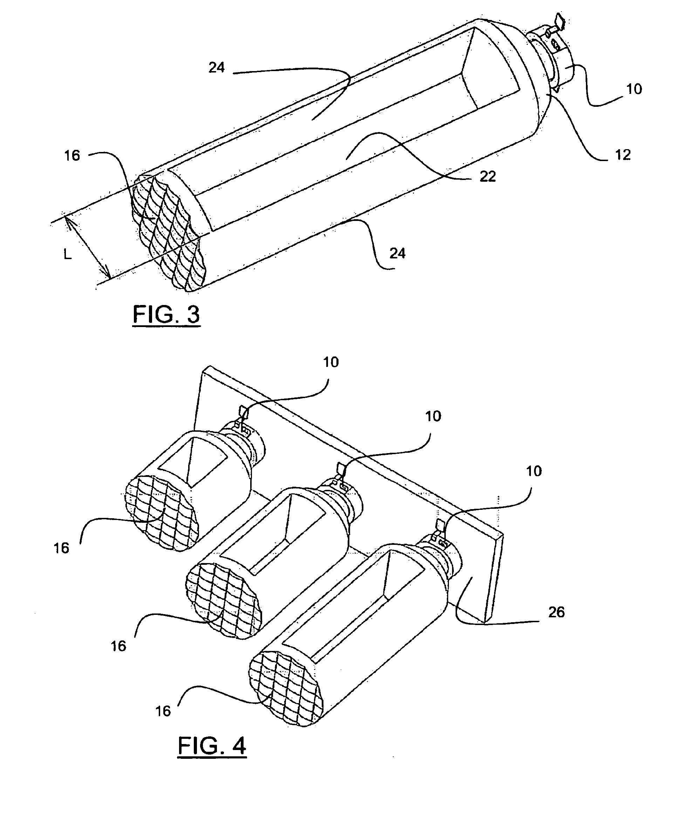

Selon un deuxième mode de réalisation, les systèmes optiques d'entrée 12 et de sortie 16 sont séparés, et distincts l'un de l'autre. Le volume entre les systèmes optiques d'entrée 12 et de sortie 16 est ainsi constitué par de l'air. Dans ce cas, les systèmes optiques d'entrée et de sortie peuvent être totalement indépendants l'un de l'autre, et maintenus chacun par un élément de support leur assurant une position relative fixe, notamment en alignement sur l'axe optique du dispositif. Ils peuvent également être disposés aux extrémités de la pièce optique volumique du mode de réalisation précédent, cette pièce ayant été évidée en 22, comme on l'a représenté sur la Figure 3, pour former un module creux.

L'évidement 22 pourra être réalisé de toute forme appropriée, les systèmes optiques d'entrée et de sortie étant maintenus l'un à l'autre par au moins un bras 24, deux dans l'exemple représenté, reliant les systèmes optique d'entrée et de sortie. La largeur L de l'évidement 22 est choisie pour assurer aux bras 24 une rigidité minimale. Dans l'exemple représenté sur la Figure 3, l'évidement 22 a une forme de parallélépipède rectangle, mais pourrait avoir toute forme prismatique désirée, de préférence symétrique par rapport à l'axe optique du dispositif.

Bien entendu, des rayons lumineux parallèles émergeant du système optique d'entrée 12 peuvent parvenir au système optique de sortie 16 en traversant le matériau transparent constituant le ou les bras 24. La réalisation du dispositif de l'invention sous forme de module monobloc comme dans le premier mode de réalisation, ou sous une forme évidée comme dans le deuxième mode de réalisation, est ainsi sans influence sur la quantité de flux lumineux parvenant au système optique de sortie 16.

L'avantage de ce deuxième mode de réalisation est de nécessiter moins de matière pour obtenir le même résultat que dans le premier mode de réalisation. Un dispositif ainsi réalisé sera donc moins lourd et moins coûteux, tout en facilitant le mode de fabrication, puisque lors du moulage du dispositif muni d'un tel évidement, le refroidissement de la matière s'effectue dans de meilleures conditions, et qu'il est donc possible d'optimiser la conception du dispositif de l'invention en minimisant par exemple l'épaisseur moyenne des bras 24, ce qui tend à procurer de meilleurs échanges thermiques lors du refroidissement.

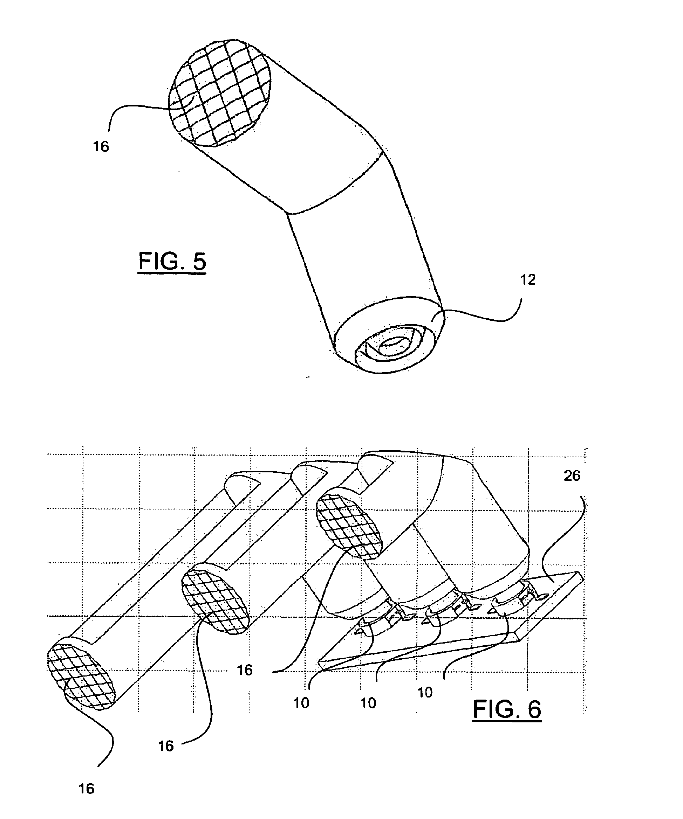

Dans le cas de la variante de la Figure 2, le miroir plan 20 pourra être constitué d'un miroir maintenu entre les systèmes optique d'entrée et de sortie. Il pourra également être obtenu comme dans le mode de réalisation précédent par une face plane sur laquelle les rayons lumineux 14 subissent une réflexion totale. On pourra par exemple réaliser d'une seule pièce le système optique d'entrée 12 et la face de réflexion totale, puis pratiquer un évidement entre la face de réflexion totale et le système optique de sortie, comme cela apparaît sur la Figure 6.

Quelle que soit la variante choisie ou son mode de réalisation, on pourra ainsi associer plusieurs modules tels qu'ils viennent d'être décrits, pour qu'ils participent en commun à la même fonction d'éclairage ou de signalisation. C'est ce qu'on a représenté sur les Figures 4 et 6, pour les deux variantes de réalisation. On voit sur ces Figures que plusieurs modules, trois en l'occurrence, sont associés.

De manière plus précise, les sources lumineuses 10, des diodes électroluminescentes dans les exemples représentés, sont disposées sur le même circuit d'alimentation électrique 26, qui peut grâce à l'invention être réalisé de forme plane. Ces diodes électroluminescentes sont associées chacune à un système optique d'entrée, disposé au voisinage de la diode électroluminescente. Grâce à l'invention, on voit qu'il est possible de disposer côte à côte plusieurs modules de longueurs différentes, par exemple de longueurs décroissantes, pour que les systèmes optiques de sortie 16 soient disposés dans des plans différents, de manière à adapter la fonction d'éclairage ou de signalisation remplie par l'ensemble des modules à une forme non plane d'une glace de fermeture d'un boîtier contenant ces modules, cette forme de glace étant imposée par les stylistes ou les constructeurs d'automobiles.

Les systèmes optiques de sortie 16 peuvent ainsi être disposés de manière à ce qu'ils soient tous dans des plans différents et sensiblement perpendiculaires à la direction générale d'émission du faisceau d'éclairage ou de signalisation, généralement parallèle à l'axe longitudinal du véhicule, alors que les sources lumineuses sont disposées toutes sur un même plan, qui peut être incliné ou perpendiculaire par rapport à cet axe.

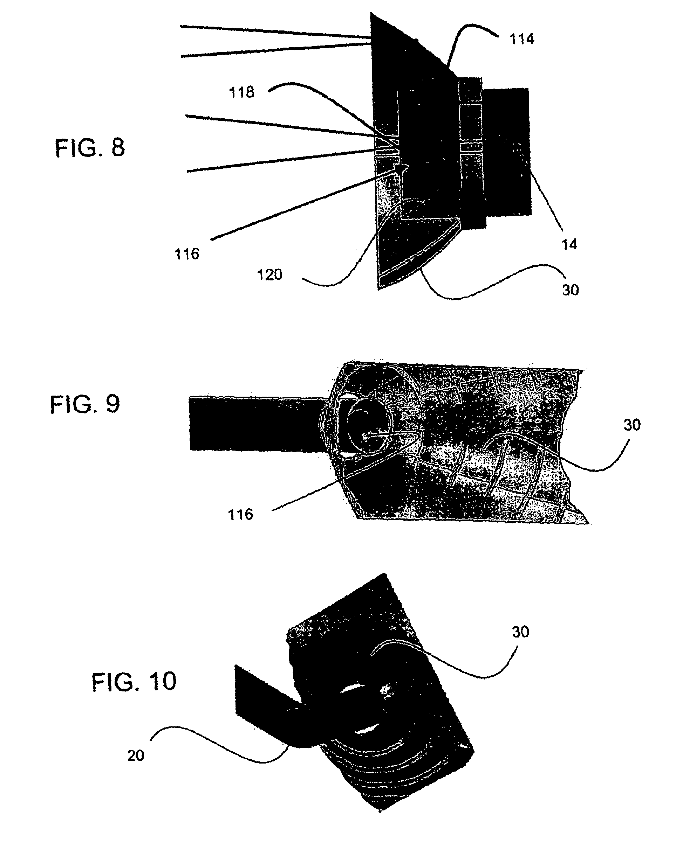

On a représenté sur la Figure 8 un deuxième mode de réalisation du système optique de sortie, constitué d'une surface 116. Cette surface 116 possède par exemple une partie centrale 118, se laissant traverser par les rayons lumineux parallèles du faisceau 14, et pouvant répartir les rayons lumineux émergeants horizontalement et/ou verticalement, à la manière des motifs lenticulaires représentés sur les figures 7A, 7B et 7C.

La surface 116 possède également une partie annulaire 120, de forme globalement tronconique, sur laquelle les rayons lumineux parallèles du faisceau 14 subissent une réflexion totale, pour émerger radialement par rapport à l'axe optique du dispositif de l'invention. Ces rayons radiaux 114 sont incidents sur un réflecteur 30, solidaire de l'extrémité 116, qui les réfléchit à son tour dans une direction sensiblement parallèle à l'axe optique du dispositif, ainsi qu'on l'a représenté sur la Figure 8.

Le réflecteur 30 pourra avantageusement être constitué d'une surface dite complexe, assurant la répartition horizontale et verticale des rayons qu'il réfléchit. On voit sur les Figures 9 et 10 l'aspect que peut présenter le dispositif d'éclairage ou de signalisation réalisé selon ce deuxième mode de réalisation.

En variante (non représentée), on peut prévoir que la surface 116 soit entièrement constituée d'une partie conique telle que 120, pour assurer la réflexion totale en direction radiale de l'ensemble des rayons du faisceau 14, aucun rayon de ce faisceau n'étant transmis directement, une partie transmissive telle que la partie centrale 118 n'existant pas.

De façon avantageuse, les différentes caractéristiques de la présente invention qui viennent d'être décrites peuvent être combinées entre elles, voire dupliquées, pour répondre à de nombreux besoins.

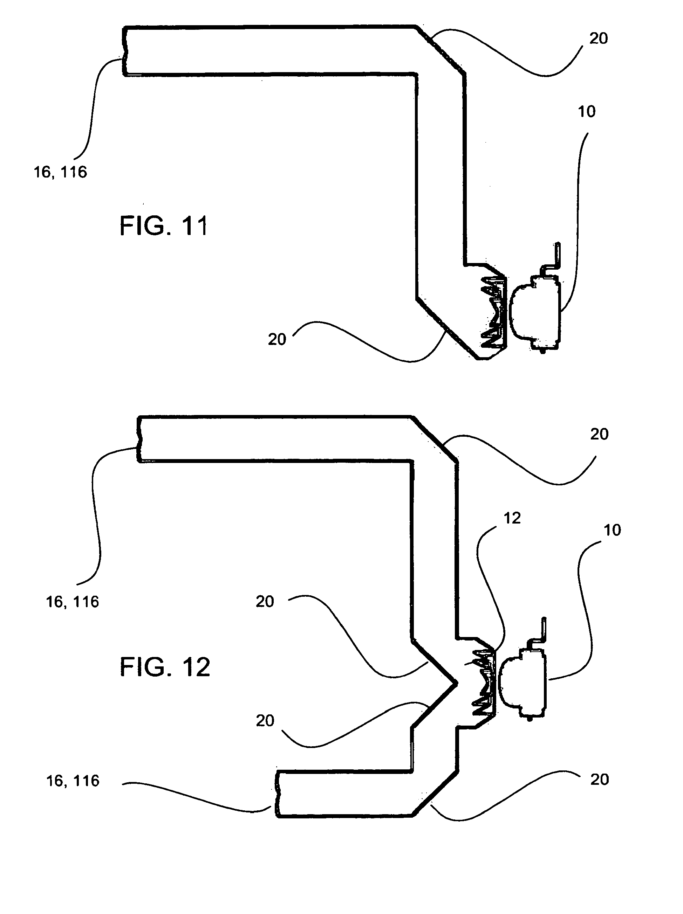

On pourra par exemple prévoir que le dispositif soit muni de deux miroirs 20 de renvoi, qu'ils soient constitués de miroirs proprement dits ou de faces de réflexion totale, tels qu'on les a décrits en référence à la Figure 2, pour constituer un dispositif tel que représenté sur la Figure 11. Une telle conception permet encore plus de souplesse dans l'implantation des sources lumineuses 10 telles que des diodes électroluminescentes par rapport à la face de sortie seule telle que 16, ou munie d'un réflecteur telle que 116. Ces faces de sortie pourront ainsi être du type de celles que l'on a représenté sur les Figures 7A, 7B et 7C, assurant par elles-mêmes la répartition des rayons lumineux qui les traversent, ou être associées à des réflecteurs représentés aux Figures 8 à 10.

On pourra également prévoir qu'une même source lumineuse 10 soit associée à plusieurs dispositifs tels que ceux que l'on vient de décrire, comme on l'a représenté sur la Figure 12. Pour ce faire, des miroirs de renvoi 20 sont disposés en aval du dispositif optique d'entrée 12, de manière à répartir une portion du faisceau parallèle 14 formé par le dispositif d'entrée 12 dans plusieurs dispositifs tels que celui qui a été décrit en référence à la Figure 11.

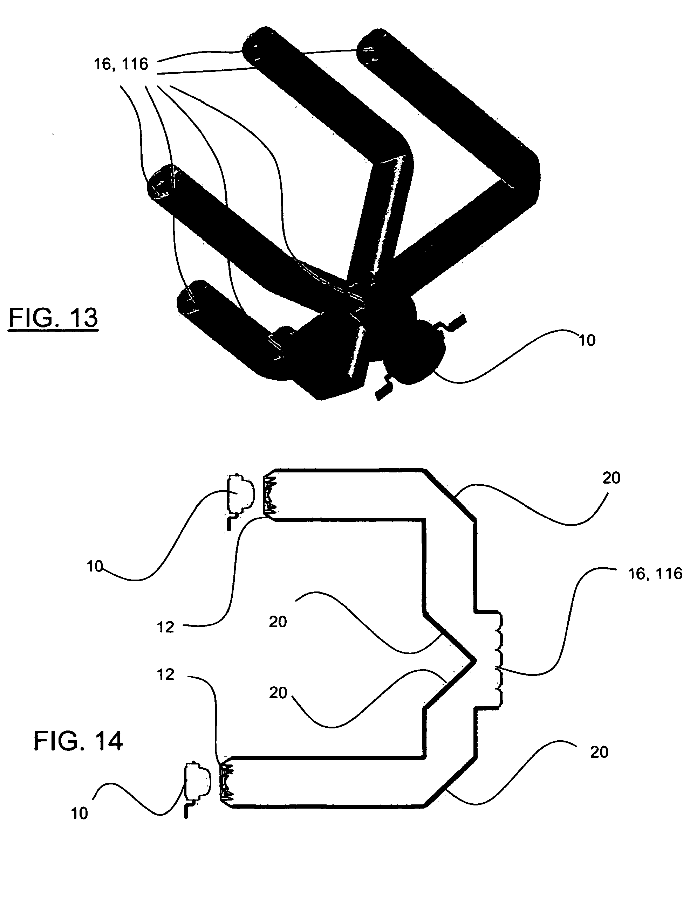

On n'a représenté sur la Figure 12 que deux dispositifs alimentés par la même source 10 et le même dispositif optique d'entrée 12, mais plusieurs dispositifs peuvent ainsi être associés à une même source, ainsi qu'on la représenté sur la Figure 13.

Les faces de sortie des dispositifs représentés sur les Figures 12 et 13 pourront elles aussi être du type de celles que l'on a représenté sur les Figures 7A, 7B et 7C, assurant par elles-mêmes la répartition des rayons lumineux qui les traversent, ou être associées à des réflecteurs représentés aux Figures 8 à 10.

Enfin, on peut également appliquer le principe du retour inverse de la lumière, par exemple au dispositif de la Figure 12, pour obtenir le dispositif représenté sur la Figure 14, dans laquelle plusieurs sources sont associées à un seul dispositif de sortie, qu'il soit du type de ceux que l'on a représenté sur les Figures 7A, 7B et 7C, assurant par eux-mêmes la répartition des rayons lumineux qui le traverse, ou être associé à un réflecteur représenté aux Figures 8 à 10.

Une telle conception permet comme précédemment une grand souplesse d'implantation entre les sources lumineuses qui peuvent être disposées indépendamment du système optique de sortie grâce à la formation de faisceaux parallèles intermédiaires, mais permet en outre d'obtenir un flux lumineux de sortie beaucoup plus important, en utilisant par exemple six sources pour une sortie unique dans un dispositif analogue à celui de la Figure 13, ou d'obtenir différents effets en utilisant des sources de couleurs différentes allumées séquentiellement.

On a donc bien réalisé un dispositif d'éclairage ou de signalisation qui peut s'adapter facilement à une enveloppe extérieure courbée en trois dimensions pour répondre à des considérations esthétiques ou aérodynamiques, de manière particulièrement simple, tout en conservant le s avantages d'un plan commun à deux dimensions pour la fixation des sources lumineuses.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple qu'on pourra utiliser pour l'élément de collimation du système optique d'entrée un miroir parabolique au foyer duquel sera placée la source lumineuse, au lieu su système dioptrique qui a été décrit.

## Revendications

1. Dispositif d'éclairage ou de signalisation, notamment pour véhicule automobile, comportant au moins une source lumineuse (10), au moins un système optique de sortie (16, 116) pour la formation d'un faisceau lumineux d'éclairage ou de signalisation réglementaire, et au moins un système optique d'entrée (12) comprenant un élément de collimation (12) recevant des rayons lumineux émis par la source (10) et transmettant un faisceau de rayons parallèles (14) vers un système optique de sortie (16, 116) de formation d'un faisceau lumineux d'éclairage ou de signalisation au moins une surface plane de réflexion (20) est disposée sur le trajet du faisceau de rayons parallèles (14), **caractérisé en ce que** l'élément de collimation (12) est une lentille convergente,

2. Dispositif selon la revendication 1, **caractérisé en ce que** le système optique d'entrée (12) et le système optique de sortie (16, 116) sont d'une seule pièce.

3. Dispositif selon la revendication 2, **caractérisé en ce que** le système optique d'entrée (12) et le système optique de sortie (16, 116) forment un module monobloc.

4. Dispositif selon la revendication 2, **caractérisé en ce que** le système optique d'entrée (12) et le système optique de sortie (16, 116) sont reliés par des bras (24).

5. Dispositif selon la revendication 1, **caractérisé en ce que** la surface de réflexion (20) est un miroir plan (20).

6. Dispositif selon la revendication 1, **caractérisé en ce que** la surface de réflexion (20) est une surface plane sur laquelle le faisceau de rayons parallèles (14) subit une réflexion totale.

7. Dispositif selon l'une quelconque des revendications précédentes, **caractérisé en ce que** l'élément de collimation (12) est une lentille convergente dont le foyer est situé au voisinage de la source lumineuse (10).

8. Dispositif selon la revendication 7, **caractérisé en ce que** l'élément de collimation (12) est une lentille de Fresnel.

9. Dispositif selon l'une quelconque des revendications précédentes, **caractérisé en ce que** le système optique de sortie (16) comporte au moins un motif lenticulaire.

10. Dispositif selon la revendication 9, **caractérisé en ce que** le motif lenticulaire possède une surface complexe.

11. Dispositif selon l'une quelconque des revendications 1 à 8, **caractérisé en ce que** le système optique de sortie (116) comporte une surface (12) sur laquelle les rayons lumineux parallèles du faisceau (14) subissent une réflexion totale pour émerger radialement par rapport à l'axe optique et être réfléchis par un réflecteur (30) dans une direction sensiblement parallèle à l'axe optique.

12. Dispositif selon la revendication 11, **caractérisé en ce que** le réflecteur (30) est constitué d'une surface complexe assurant la répartition horizontale et verticale des rayons qu'il réfléchit.

13. Dispositif selon l'une quelconque des revendications précédentes, **caractérisé en ce que** la source lumineuse (10) est une diode électroluminescente.

14. Dispositif selon l'une quelconque des revendication précédentes, **caractérisé en ce qu'**il comporte au moins deux sources lumineuses (10), chacune étant associée à un système optique d'entrée et à un système optique de sortie.

15. Dispositif selon la revendication 12, **caractérisé en ce que** les sources lumineuses (10) sont disposées sur le même circuit d'alimentation électrique (26) plan.

16. Dispositif selon la revendication 13, **caractérisé en ce que** les systèmes optiques de sortie (16, 116) sont disposés dans des plans différents

17. Dispositif selon l'une des revendications 1 à 12, **caractérisé en ce qu'**il comporte un système optique d'entrée (12) et au moins deux systèmes optiques de sortie (16, 116) de formation d'un faisceau lumineux d'éclairage ou de signalisation, une surface de réflexion (20) étant associée à chaque système optique de sortie (16, 116).

18. Dispositif selon l'une des revendications 1 à 12, **caractérisé en ce qu'**il comporte un système optique de sortie (16, 116) et au moins deux systèmes optiques d'entrée (12), une surface de réflexion (20) étant associée à chaque système optique d'entrée (12).

## Claims

1. A lighting or indicator device, in particular for motor vehicles, comprising at least one light source (10), at least one output optical system (16, 116) for forming a regulatory lighting or indicator light beam, and at least one input optical system (12) comprising a collimation element (12) receiving light rays emitted by the source (10) and transmitting a beam of parallel rays (14) towards an output optical system (16, 116) for forming a lighting or indicator light beam at least one planar reflection surface (20) is disposed on the path of the beam of parallel rays (14), **characterised in that** the collimation element (12) is a converging lens.

2. A device according to claim 1, **characterised in that** the optical input system (12) and the optical output system (16, 116) are in a single piece.

3. A device according to claim 2, **characterised in that** the input optical system (12) and the output optical system (16, 116) form a single-piece module.

4. A device according to claim 2, **characterised in that** the input optical system (12) and the output optical system (16, 116) are connected by arms (24).

5. A device according to claim 1, **characterised in that** the reflection surface (20) is a plane mirror (20).

6. A device according to claim 1, **characterised in that** the reflection surface (20) is a planar surface on which the beam of parallel rays (14) undergoes total reflection.

7. A device according to any one of the preceding claims, **characterised in that** the collimating element (12) is a converging lens whose focus is located in the vicinity of the light source (10).

8. A device according to claim 7, **characterised in that** the collimating element (12) is a Fresnel lens.

9. A device according to any one of the preceding claims, **characterised in that** the output optical system (16) comprises at least one lens unit.

10. A device according t claim 9, **characterised in that** the lens unit has complex surface.

11. A device according to one of claims 1 to 8, **characterised in that** the output optical system (116) comprises a surface (12) on which the parallel light rays of the beam (14) undergo total reflection so as to emerge radially with respect to the optical axis and to be reflected by a reflector (30) in a direction substantially parallel to the optical axis.

12. A device according to claim 11, **characterised in that** the reflector (30) consists of a complex surface ensuring horizontal and vertical distribution of the rays that it reflects.

13. A device according to any one of the preceding claims, **characterised in that** the light source (10) is a light-emitting diode.

14. A device according to any one of the preceding claims, **characterised in that** it comprises at least two light sources (10), each being associated with an input optical system and an output optical system.

15. A device according to claim 12**, characterised in that** the light sources (10) are disposed on the same planar electrical supply circuit (26).

16. A device according to claim 13, **characterised in that** the output optical systems (16, 116) are disposed in different planes.

17. A device according to one of claims 1 to 12, **characterised in that** it comprises an input optical system (12) and at least two output optical systems (16, 116) for forming a lighting or indicator light beam, a reflection surface (20) being associated with each output optical system (16, 116).

18. A device according to one of claims 1 to 12, **characterised in that** it comprises an output optical system (16, 116) and at least two input optical systems (12), a reflection surface (20) being associated with each input optical system (12).

## Patentansprüche

1. Beleuchtungs- oder Signalgebungsvorrichtung, insbesondere für Kraftfahrzeuge, mit wenigstens einer Lichtquelle (10), wenigstens einem optischen Austrittssystem (16, 116) zur Bildung eines vorschriftsmäßigen Beleuchtungs- oder Signallichtbündels und wenigstens einem optischen Eintrittssystem (12) mit einem Kollimationselement (12), das durch die Lichtquelle (10) emittierte Lichtstrahlen empfängt und ein Bündel paralleler Lichtstrahlen (14) zu einem optischen Austrittssystem (16, 116) zur Bildung eines Beleuchtungs- oder Signallichtbündels sendet, wobei wenigstens eine plane Reflexionsfläche (20) im Strahlengang des Bündels paralleler Lichtstrahlen (14) angeordnet ist,
**dadurch gekennzeichnet, dass** das Kollimationselement (12) eine Sammellinse ist.

2. Vorrichtung nach Anspruch 1,
**dadurch gekennzeichnet, dass** das optische Eintrittssystem (12) und das optische Austrittssystem (16, 116) einstückig ausgebildet sind.

3. Vorrichtung nach Anspruch 2,
**dadurch gekennzeichnet, dass** das optische Eintrittssystem (12) und das optische Austrittssystem (16, 116) ein einstückiges Modul bilden.

4. Vorrichtung nach Anspruch 2,
**dadurch gekennzeichnet, dass** das optische Eintrittssystem (12) und das optische Austrittssystem (16, 116) durch Arme (24) miteinander verbunden sind.

5. Vorrichtung nach Anspruch 1,
**dadurch gekennzeichnet, dass** die Reflexionsfläche (20) ein Planspiegel (20) ist.

6. Vorrichtung nach Anspruch 1,
**dadurch gekennzeichnet, dass** die Reflexionsfläche (20) eine ebene Fläche ist, auf der das Bündel paralleler Lichtstrahlen (14) einer Totalreflexion unterliegt.

7. Vorrichtung nach einem der vorhergehenden Ansprüche,
**dadurch gekennzeichnet, dass** das Kollimationselement (12) eine Sammellinse ist, deren Brennpunkt in der Nähe der Lichtquelle (10) liegt.

8. Vorrichtung nach Anspruch 7,
**dadurch gekennzeichnet, dass** das Kollimationselement (12) eine Fresnel-Linse ist.

9. Vorrichtung nach einem der vorhergehenden Ansprüche,
**dadurch gekennzeichnet, dass** das optische Austrittssystem (16) wenigstens ein linsenförmiges Muster aufweist.

10. Vorrichtung nach Anspruch 9,
**dadurch gekennzeichnet, dass** das linsenförmige Muster eine komplexe Oberfläche aufweist.

11. Vorrichtung nach einem der Ansprüche 1 bis 8,
**dadurch gekennzeichnet, dass** das optische Austrittssystem (116) eine Oberfläche (12) aufweist, auf der die parallelen Lichtstrahlen des Lichtbündels (14) einer Totalreflexion unterliegen, um bezüglich der optischen Achse radial auszutreten und von einem Reflektor (30) in eine zur optischen Achse im Wesentlichen parallele Richtung reflektiert zu werden.

12. Vorrichtung nach Anspruch 11,
**dadurch gekennzeichnet, dass** der Reflektor (30) von einer komplexen Oberfläche gebildet ist, welche die horizontale und vertikale Verteilung der von diesem reflektierten Lichtstrahlen sicherstellt.

13. Vorrichtung nach einem der vorhergehenden Ansprüche,
**dadurch gekennzeichnet, dass** die Lichtquelle (10) eine Leuchtdiode ist.

14. Vorrichtung nach einem der vorhergehenden Ansprüche,
**dadurch gekennzeichnet, dass** sie wenigstens zwei Lichtquellen (10) umfasst, wobei jede einem optischen Eintrittssystem und einem optischen Austrittssystem zugeordnet ist.

15. Vorrichtung nach Anspruch 12,
**dadurch gekennzeichnet, dass** die Lichtquellen (10) auf demselben ebenen Speisestromkreis (26) angeordnet sind.

16. Vorrichtung nach Anspruch 13,
**dadurch gekennzeichnet, dass** die optischen Austrittssysteme (16, 116) in unterschiedlichen Ebenen angeordnet sind.

17. Vorrichtung nach einem der Ansprüche 1 bis 12,
**dadurch gekennzeichnet, dass** sie ein optisches Eintrittssystem (12) und wenigstens zwei optische Austrittssysteme (16, 116) zur Bildung eines Beleuchtungs- oder Signallichtbündels umfasst, wobei jedem optischen Austrittssystem (16, 116) eine Reflexionsfläche (20) zugeordnet ist.

18. Vorrichtung nach einem der Ansprüche 1 bis 12,
**dadurch gekennzeichnet, dass** sie ein optisches Austrittssystem (16, 116) und wenigstens zwei optische Eintrittssysteme (12) umfasst, wobei jedem optischen Eintrittssystem (12) eine Reflexionsfläche (20) zugeordnet ist.
